# EUROPEAN PATENT APPLICATION

(11) **EP 0 575 298 A1**
(43) Date of publication of application: **22.12.1993**
(21) Application number: 93830234.6
(22) Date of filing: 27.05.1993
(51) Int. Cl.: A01G 9/10

(54) **Container for growing seedlings in cakes of soil**

(30) Priority: 19.06.1992 IT RM920472
(71) Applicant: SOCIETA AGRICOLA E FORESTALE PER LE PIANTE DA CELLULOSA E DA CARTA - S.A.F. S.p.A., I-00187 Roma RM (IT)
(72) Inventor: Rossi Marcelli, Andrea, I-00166 Roma RM (IT)

(57) **Abstract**

A container for cultivation of seedlings in cakes of earth comprises a side wall (2) closed at one end along an edge joint (4) by a base element (3), characterized in that the inner surface of the wall is provided with longitudinal grooves (5) which each terminate in a respective opening (6) on the edge joint; the base element having a substantially frusto-pyramidal or frusto-conical shape, extending inward into the container and having a sustantially circular hole (7) at its center; second grooves (8) being formed in a radial direction on the inner surface of said base element, said second grooves terminating in respective openings (6) on the edge joint (4), respective first and second grooves running into each of said openings.

## Description

The present invention refers to a container for growing seedlings in cakes of soil.

### Field of application of the invention

Cultivation of forest trees can be bare root or in containers. The bare root system of cultivation is especially preferred in nurseries situated in cool plain or mountain regions, and for the cultivation of various species destined for areas in which the climatic and pedological conditions are sufficiently favourable.

For the cultivation of main root or rapid growth species and for reforesting of areas with a temperate to hot climate and low rainfall, the system of cultivation in containers is preferred, because the cakes of soil, which protect the roots and the entire plant efficiently from dehydration, give a greater guarantee of success when planting, allow greater flexibility of use of the nursery material and greatly extend the planting-out period. It is above all for these reasons that cultivation in containers is widely used not only in countries with a mediterranean climate, but also in northern regions and Alpine areas, where there is still snow on the ground until late Spring.

However, cultivation in containers presents a number of drawbacks, among which the main one is that of giving the root systems of the plant a conformation which differs more or less from that obtained in freely grown plants, above all in consequence of the geometrical characteristics of the container.

In spite of the fact that most modern containers, in particular those for cultivation of ligneous and forest trees, known from the state of the art, have been designed with the aim of minimizing root deformation or of producing innocuous or only slightly harmful deformations, none of the above containers is capable of fully respecting the natural morphology of the roots. The main consequence of this is that the function of the roots themselves is compromised in a more or less serious manner.

The root system of plants grown from seed is made up of a main root, of primary side roots branching off from the main root, and of secondary side roots branching off from the primary ones. If no obstacles are encountered during growth, the main root grows downward in a vertical direction (orthogeotropic), while the side roots develop in a prevalently oblique direction (plagiotropic). When the plants are grown in a container, the roots are forced to develop in an extremely limited amount of soil, resulting in inevitable deformation of the root systems, which take on an appearance very different from that of plants freely grown in the soil.

The deformations suffered by the plants during cultivation in containers can be of various kinds: some of these have serious consequences on the survival and development of the plants when planted out, as they seriously compromise the functions of absorption and anchorage to the soil, particularly in the case of ligneous and forest species, whereas others have less serious consequences, as they do not cause substantial alteration of the architecture and function of the root systems.

One of the most serious types of root malformation is represented by the twisting together of the side roots and the main root along the sides and bottom of the container. When the cake of soil is removed from the container in order to plant out the seedlings, the "spring" arrangement of the roots remains practically unaltered as time goes on, thus preventing the main root from sinking into the ground. In this way all the roots continue to grow around each other and to expand until they weld together, forming a mass of roots with the typical "chignon" shape (from the French word "chignon"). This phenomenon of root anastomosis is particularly harmful in the case of arboreal and forest species destined to remain planted out for many years, as it damages both the function of mechanical anchoring, with consequent great risk of falling, and that of the absorption and transportation of lymph to the epigeous organs, causing slower development and consequent withering of the plants.

Another type of deformation, which is in this case practically innocuous, is the atrophying of the tips of roots growing out of the openings on the walls and base of the containers when coming into contact with the air, so-called "air pruning". This phenomenon is innocuous in that the root tips are able to resume normal growth when, after removal from the container, the cake of soil is planted and they come into direct contact with the soil.

Finally, a type of root deformation which is only slightly harmful is orthogeotropic deviation of the secondary roots, which normally develop in a "plagiotropic" manner, that is to say when the secondary roots grow in a vertical direction rather than an oblique one.

### State of the art

All the containers for cultivation of seedlings in cakes of soil known from the state of the art show one or more disadvantage as far as their tendency to respect the morphology of the root systems is concerned, with the consequence that function of the latter is more or less extensively compromised. Among these containers can be mentioned, for example, common fired clay plant pots and bags in polyethylene film, which are all totally lacking in any device suitable to prevent formation of considerable and extremely prejudicial malformations.

Other containers also known to the state of the art have walls and base permeable to air and water, and through which the roots can penetrate (for example vases made of pressed fiber, bags made of unwoven fabric, etc.) which favour air pruning of the roots and do not cause any substantial alteration of the natural root system.

However, these containers present the important disadvantage that they do not protect the cake of soil and the roots contained therein sufficiently against dehydration and other adverse conditions, thereby limiting their use greatly. These limits are felt above all when the material produced is destined for use under pedoclimatic conditions or in areas at a great distance from the nursery in which the seedlings have been grown.

Also forming part of the most recent state of the art are new types of container with a rigid or only slightly deformable structure, containing devices which tend to give the best possible shape to the root system. Among the latter devices can be mentioned two basic types: the first is represented by containers having walls provided with vertical grooves and a central hole at the base; the lower portion of the container is generally tapered towards the central hole, or else the container can be left without a base. The second type is characterized by containers having a raised conical base, which can be provided with corrugations or radial projections and small peripheral openings. The first type has been developed taking advantage of the tendency of roots to follow the direction of any grooves in the walls of containers, as there is a greater concentration of oxygen in said grooves. The roots stop growing without becoming deformed when they come into contact with the air on the outside of the container. However, these containers also show a number of drawbacks in use. As regards the containers belonging to the first type, the characteristic of forcing all the roots to grow in an orthogeotropic (or vertical) direction means that, in the containers with a tapered base, the numerous quiescent root apexes in the vicinity of the base hole all converge along a single central axis, so that the roots tend to meet and anastomose during their subsequent growth when planted out. This circumstance causes disturbances to the vessels and slows down transport of the raw lymph. The containers of the first type with a completely open base and no narrowing do not generally show this disadvantage, but instead they have the disadvantage of greatly reduced ease of handling and practicality of use due to the often large loss of substrate which inevitably occurs during cultivation, manipulation and planting out of the seedlings.

The main disadvantage found in the containers of the second type, that is to say in those with the raised base and numerous small external openings, consists in the deviation of the main root with respect to the caulinary axis (that is to say the deviation from a substantially vertical or orthogeotropic direction), with formation of a lever arm which can cause clearly visible curving in the base of the trunk. In ligneous species this is prejudicial to the stability of the tree when planted out, and greatly damages the technological characteristics of the wood. Furthermore, in other cases the openings on the base are incorrectly positioned or too small, so that their efficiency in producing the desired effects is not great.

Italian patent application No. 1236A/87 describes a container of the second kind having a substantially frusto-conical shape, whose closed and raised base is conical in shape. This causes the main root to deviate from the caulinary axis, with the consequences indicated above. Projections are formed on the walls of the container itself with the aim of preventing the roots from twining together, by means of a simple mechanical action. In this patent application the presence of external openings is also described, said openings being formed around the edge of the base, and which appear to be undersized as indicated above for other containers of the second kind.

An object of the above invention was therefore that of providing a container for raising seedlings in cakes of soil which, as well as preventing the roots from tangling together and maintaining a sufficient degree of humidity in the cake of soil for as long as possible, was also capable of maintaining growth of the main root in the direction of the caulinary axis, while at the same time allowing the secondary roots to grow as much as possible in their natural plagiotropic direction until leaving the container through openings extending both on the base and on the sides thereof.

It has now been surprisingly found that it is possible to overcome the disadvantages mentioned above by using a container with a closed base, in which the base element, which extends towards the inside of the container, has a frusto-conical or frusto-pyramidal shape and has a substantially circular hole at its summit.

Object of the present invention is therefore a container for raising seedlings in cakes of soil having a substantially polygonal or circular cross-section, comprising a closed side wall and a base element closing it off at one end along an edge joint, characterized by the fact that on the inner surface of said wall first longitudinal grooves are formed lengthwise along the whole length of said container, each of said first grooves terminating in a respective opening on the edge joint;
said base element, of a substantially frusto-conical or frusto-pyramidal shape extending inward into said container, having a substantially circular hole at its center; second radial grooves being formed on the internal surface of said base element, each of said grooves terminating in one of said openings,
the arrangement being such that said respective first and second grooves run into each of said openings, and said openings extend beyond the edge joint both on said side wall and on said base.

### Brief description of the drawings

Enclosed with the present description are two sheets of drawings, in which:
figure 1 is a partially cut out axonometric view of a preferred embodiment of the container according to the present invention;
figure 2 is a top view of the container according to figure 1;
figure 3 is a cross-section view along plane A-A' of figure 2;
figure 4 is an enlarged detail of the part of figure 1 shown inside the rectangle B;
figure 5 is a top view of a container in which the hole is partially obstructed by a cross-shaped element; and
figures 6, 7 and 8 schematically illustrate three alternative embodiments of the container according to the present invention, with a circular, triangular and hexagonal directrix, respectively.

### Detailed description of the invention

The present invention will now be described in greater detail with reference to the enclosed drawings.

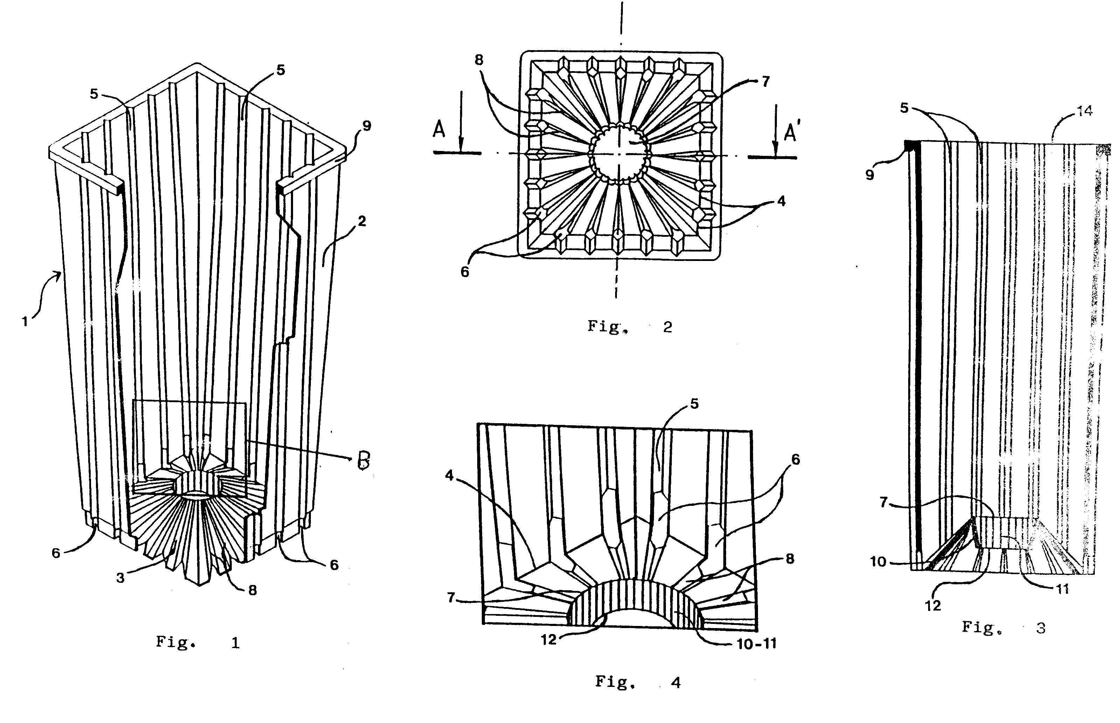

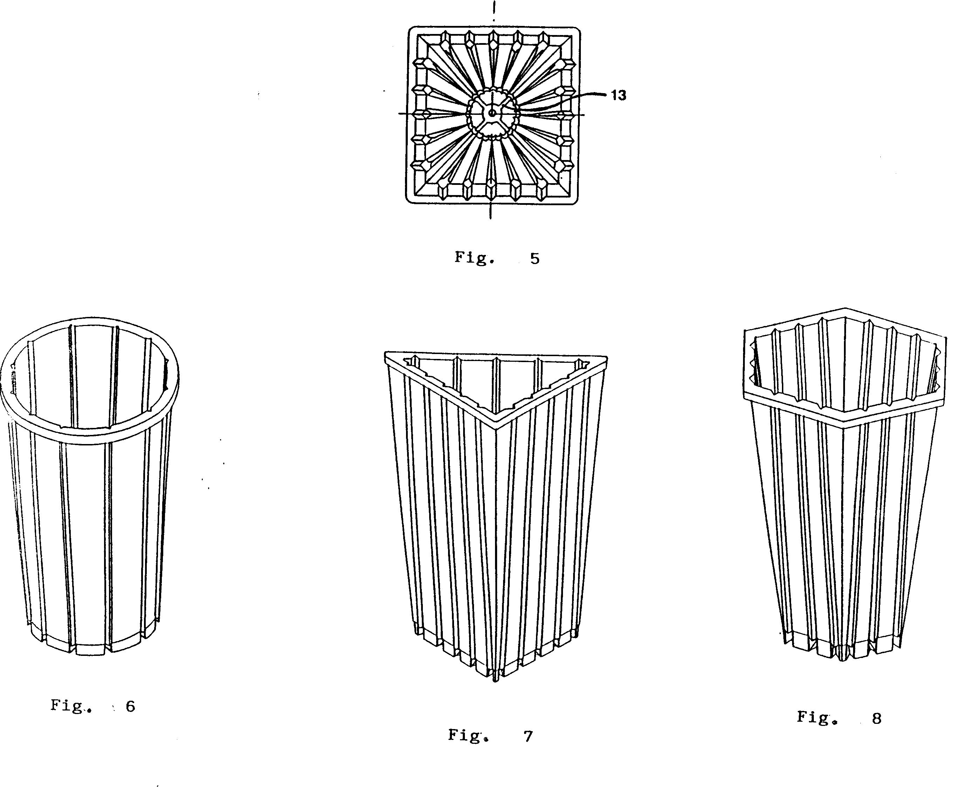

With reference to figures 1, 2 and 3, the container 1 comprises a side wall 2 and a base element 3 closing it at one end along an edge joint 4. In correspondence with the end 14 of side wall 2 opposite to said joint, a rim 9 can be provided to facilitate handling of the container itself and to allow it to be positioned better on racks, in which a number of containers according to the present invention can be placed.

The container illustrated in figures 1, 2 and 3 has a square base and cross-section, and is preferably slightly capered toward the bottom. Further examples of containers according to the present invention with circular, triangular or hexagonal cross-sections (or directrixes) are shown in figures 6, 7 and 8, respectively.

On the inner surface of the side wall 2 first grooves 5 are formed lengthwise along the whole length of the container. Each one of said grooves 5 terminates in a respective opening 6, formed in the edge joint (see also figure 4). Said grooves are formed so as to take advantage of the tendency of roots to follow the direction of any hollow spaces encountered during their development, as these contain a larger concentration of oxygen.

The base element 3 of the container 1 has a substantially frusto-pyramidal or frusto-conical shape and extends inward into said container 1. At the tip of the base element 3 a substantially circular hole 7 is formed. The shape of said hole can also be polygonal. On the inner surface of the base element 3 second grooves 8 are formed, said grooves extending radially from the hole to the edge joint 4 and each one terminating in one of the respective openings 6. The arrangement of the first grooves 5 and of the second grooves 8 is such that each of said first grooves corresponds to a respective second groove and both terminate in the same opening 6, as can be more clearly seen from figure 4. Each of said openings 6 extends from the edge joint part of the way up both said side wall 2 and said base element 3. The primary and secondary roots channeled in a substantially orthogeotropic direction due to the geometrical shape of the container 1, when coming into contact with the air after passing through the openings 6, undergo so-called "air pruning" and can undergo no deformation.

Considering the fact that within the grooves (5 and 8) there is a higher concentration of oxygen, as the substrate used for cultivation does not adhere to them perfectly, these areas form a number of well aerated channels which strongly attract the roots, unlike the surrounding areas with a more asphyctic environment, which repulse the roots; in this way, respiration of the root systems is helped, and the trophism of the entire plant improved. In fact, like all plant organs, the root breath, and therefore require air in order to live.

The effectiveness of the openings 6 situated along the edge joint 4 is ensured by their position at the point of junction of the first grooves 5 and the second grooves 8. Thanks to the fact that each opening faces both outward and downward, it is possible to substantially maintain the direction of the roots growing into them: the plagiotropic direction of the secondary roots developing along the grooves on the base, and the "orthogeotropic" direction of the roots following the vertical grooves on the walls. In this way deformation of the primary and secondary roots is minimal; furthermore the hole 7 in the base element 3 prevents deviation from the caulinary axis (that is to say from the vertical direction) of the main root. This form of embodiment of the openings overcomes the drawbacks caused by containers according to the state of the art, in which the openings, which were always small and often incorrectly placed, did not extend simultaneously along both the side wall and the base of the container.

In an alternative embodiment of the present invention the hole 7 extends outward from the container to give a substantially frusto-conical portion 10 (see figure 3), tapered towards the outside, and on the surface of which longitudinal ribs 11 are formed. The vertical ribs 11 on the inner surface of the frusto-conical portion 10 have the job of directing the main root downward and of keeping it vertical during its growth, thus increasing the effectiveness of the hole 7.

In another embodiment of the container according to the present invention, better illustrated in figure 5, the end 12 of said frusto-conical portion 10 is partially closed by a substantially cross-shaped element 13. The element 13, which partially obstructs the lower opening 12, helps to keep in the cultivation substrate, thus preventing its loss through the base and minimizing dehydration of the cake of soil.

There are a wide range of possibilities for industrial application of the invention, which relate both to the cultivation of forest trees and to the cultivation of plants for ornamental and urban use. It is, in fact, sufficient to vary the shape and/or size and capacity of the container, while at the same time maintaining its construction principles, so as to adapt the container to its various uses.

As regards the field of forestry, the possible range of uses is extremely wide, given that, in Italy alone, many millions of seedlings are cultivated each year in cakes of soil, and none of the many types of container presently available is devoid of drawbacks.

As regards the cultivation of ornamental plants and those used for landscape gardening or urban decoration, in the past much importance was given in particular to the development of the epigeous portion, whereas today there is a tendency also to pay more attention to the quality of the root systems. It is in this area that the present invention has perhaps the greatest capacity for industrial application, given that no containers with special devices capable of safeguarding the correct development of the roots and suitable for cultivation of large plants are at present available.

Whereas the invention has been described in considerable detail with reference to its preferred embodiments, it will be clear to those skilled in the art that modifications can be made which are to be considered within the scope of the present invention.

## Claims

1. A container for raising seedlings in cakes of soil, having a substantially polygonal or circular cross-section, comprising a closed side wall (2) and a base element (3) closing it at one end along an edge joint (4),
characterized in that
on the inner surface of said wall first grooves (5) are formed lengthwise along the whole length of said container, each one of said first grooves terminating in a respective opening (6) on said edge joint;
said base element having a substantially frusto-pyramidal or frusto-conical shape and extending inward into said container, having a substantially circular hole (7) at its center, second grooves (8) being formed in a radial direction on the inner surface of said base element, each one of said second grooves terminating in one of said openings (6);
the arrangement being such that first and second grooves run into each one of said openings, said openings extending beyond the edge joint both onto said side wall and onto said base element.

2. The container according to claim 1, in which said hole extends outward from the container to form a substantially frusto-conical portion (10) tapered towards the outside, on the inner surface of which ribs (11) are formed lengthwise.

3. The container according to claim 2, in which said frusto-conical portion has at its outer end a substantially cross-shaped element (13) which partially obstructs the bottom opening (12).

4. The container according to any one of the preceding claims, characterized in that it is slightly narrower toward the bottom.
